Europäisches Patentamt

European Patent Office

Office européen des brevets

(19)

(11) Veröffentlichungsnummer: **0 162 298**
**A1**

(12) # EUROPÄISCHE PATENTANMELDUNG

(21) Anmeldenummer: 85104778.7

(22) Anmeldetag: 19.04.85

(51) Int. Cl.⁴: **G 06 K 9/48**

(30) Priorität: 25.04.84 DE 3415467

(43) Veröffentlichungstag der Anmeldung:
27.11.85 Patentblatt 85/48

(84) Benannte Vertragsstaaten:
BE CH DE FR GB IT LI NL SE

(71) Anmelder: **Siemens Aktiengesellschaft
Berlin und München Wittelsbacherplatz 2
D-8000 München 2(DE)**

(72) Erfinder: **Köllensperger, Paul, Dipl.-Ing.
Engadinerstrasse 36
D-8000 München 71(DE)**

(72) Erfinder: **Beutel, Wilhelm, Dipl.-Ing.
Strassbergerstrasse 32
D-8000 München 40(DE)**

(72) Erfinder: **Grasmüller, Hans, Ing. grad.
Kapellenstrasse 4
D-8083 Mammendorf(DE)**

(72) Erfinder: **Hohberger, Karl, Ing. grad.
Dientzenhoferstrasse 6
D-8152 Feldkirchen-Westerham(DE)**

(72) Erfinder: **Reischl, Anna
Gerhardstrasse 12
D-8000 München 90(DE)**

(72) Erfinder: **Rummel, Peter, Dipl.-Ing.
Miesbacher Strasse 94
D-8184 Festenham(DE)**

(54) Anordnung zur Extraktion und Verdünnung von Linien aus Gradientenbildern.

(57) Die Anordnung zur modellgesteuerten Szenenanalyse geht von der Annahme aus, daß technische Objekte in der Regel durch ihre Kanten und die Kanten wiederum durch Merkmale wie, Gerade, Kreise, Kreisbögen, Ecken und Texturen beschreibbar sind. Diese Primitive stellen Merkmale für die anschließende, durch gespeicherte Werkstückmodelle gesteuerte Szenenanalyse dar. Aufgabe der hier beschriebenen Anordnung ist es, aus einem szenenbeschreibenden Gradientenbild bildpunktbreite Linien zu extrahieren, deren Verlauf die Kanten oder Texturen der Objekte der Szene beschreiben.

./...

FIG 1

0162298

Siemens Aktiengesellschaft          Unser Zeichen
Berlin und München                  VPA  84 P 1 3 2 8 E

Anordnung zur Extraktion und Verdünnung von Linien aus Gradientenbildern.

Die Erfindung betrifft eine Anordnung zur Extraktion und Verdünnung von Linien aus dem Graubild einer Szene, das von einem Bildwandler aufgenommen und in elektrische Signale umgesetzt wird.

Die Leistung der bisher am Markt verfügbaren visuellen Sensoren zur Lageerkennung von Werkstücken reicht für den Einsatz in flexiblen Fertigungen im allgemeinen nicht aus, um einen wirtschaftlichen und technisch sinnvollen Einsatz dieser Geräte zu ermöglichen.

Die bisher am Markt verfügbaren Sensoren bilden die dreidimensionale Szene, welche die Werkstücke enthält, in ein Binärbild ab, in dem sich das zu erkennende Werkstück als weiße Fläche vom schwarzen Hintergrund oder umgekehrt abhebt. Dieses flächenhafte, die Silhouette des Werkstückes beschreibende Muster wird nun mit vergleichsweise einfachen Algorithmen (zum Beispiel Schwerpunktsberechnung zur Lagebestimmung, Ermittlung der Trägheitsachsen bzw. "Polarcheck" zur Drehlageermittlung) ausgewertet. Diese Art der Auswertung setzt voraus, daß sich verschiedene Werkstücke nicht berühren oder überlappen, daß andererseits aber ein Werkstück auch nicht durch die Binärisierung in mehrere Flächen zerfällt. Für die Erkennung von nicht vereinzelten Werkstücken muß daher vom Grauwertbild, in dem Kanten sichtbar sind, ausgegangen werden.

Wed 1 Plr/2.2.1984

Zur Auswertung von Grauwertbildern existieren zahlreiche Algorithmen, die jedoch im allgemeinen außerordentlich rechenintensiv sind und normalerweise für den Einsatz in der Fertigungsautomatisierung wegen des erforderlichen Geräte- und Zeitaufwandes nicht in Frage kommen.

Der Erfindung liegt die Aufgabe zugrunde, ein an unterschiedliche Gegebenheiten anpaßbares, genügend schnelles, wirtschaftliches Sensorsystem zur Erkennung und Inspektion von sich überlappenden, nicht vereinzelten Werkstücken zu entwickeln. Dabei ist es das Ziel der beschriebenen Kantenverfolgung, aus dem mit Hilfe eines Flächenfilters aus dem Grauwertbild einer Szene gebildeten Gradientenbild Linien zu extrahieren. Die Anordnung nach der Erfindung geht von der Annahme aus, daß technische Objekte in der Regel durch ihre Kanten und Texturen und die Kanten wiederum durch Merkmale wie Gerade, Kreise, Kreisbögen, Ecken beschreibbar sind.

Verfahren zur Extraktion von Linien sind aus der Literatur bekannt, zum Beispiel Y. Shirai, Edge finding, segmentation of edges and recognition of complex objects, Proc. 4th Int. Joint Conf. on Artificial Intelligence, Tbilisi, USSR, pp. 674 - 681 (1975), ferner Guner S. Robinson: Detection and Coding of Edges Using Directional Masks (Optical Engineering Vol. 16 (1977) No. 6, S. 580 - 585), außerdem W. A. Perkins, A model-based system for for industrial parts, IEEE Trans. Comput. C-27, pp. 126 - 143 (1978). Diese Linienverfolgungsverfahren sind aber - soweit bekannt - als Geräte nicht realisiert sondern nur in Rechenanlagen implementiert, wobei sich Auswertezeiten ergeben, die für die Erkennung und Inspektion von Werkstücken zur Fertigungsautomatisierung nicht vertretbar sind.

Die der Erfindung zugrundeliegende Aufgabe wird dadurch gelöst, daß Mittel vorgesehen sind, in denen das Grauwert-

**0162298**

bild in ein Gradientenvektorbild in Echtzeit umgewandelt
wird und daß das entsprechende Gradientenvektorbild in
einem Gradientenspeicher abgespeichert wird, daß ferner
ein Merkerspeicher vorgesehen ist und der Gradientenspeicher und der Merkerspeicher mit Hilfe einer Adressiereinheit angesprochen und die ausgelesenen Werte einer
Gradienten- und Merkerauswerteeinheit zugeführt werden
und außerdem eine Linienübergabeeinheit angeordnet ist,
in der die von der Auswerteeinheit erkannten Linienpunkte
übertragen werden und zusätzlich eine Steuereinheit vorgesehen ist, die Takt- und Steuersignale für die Adressiereinheit, Gradienten- und Merkerauswerteeinheit und
Linienübergabeeinheit liefert und daß die ermittelten
Linienpunkte von der Linienübergabeeinheit zur Weiterverarbeitung bereitgestellt werden.

Eine weitere Anordnung zur Lösung dieser Aufgabe besteht
darin, daß das Grauwertbild in einen Grauwertbildspeicher
eingelesen wird, daß ferner ein Merkerspeicher vorgesehen
ist, und der Grauwertbildspeicher und der Merkerspeicher
mit Hilfe einer Adressiereinheit angesprochen und aus den
ausgelesenen Grauwerten mittels eines Flächenfilters ein
Gradientenvektor erzeugt und einer Gradienten/Merkerauswerteeinheit zugeführt wird und eine Linienübergabeeinheit
vorgesehen ist, in die die von der Auswerteeinheit erkannten Linienpunkte übertragen werden und zusätzlich
eine Steuereinheit angeordnet ist, die Takt- und Steuersignale für die Adressiereinheit, Gradienten- und Merkerauswerteeinheit und Linienübergabeeinheit liefert und
daß die ermittelten Linienpunkte von der Linienübergabeeinheit zur Weiterverarbeitung bereitgestellt werden.

Eine weitere Anordnung besteht darin, daß Mittel vorgesehen sind, in denen das Grauwertbild in ein Gradientenvektorbild in Echtzeit umgewandelt wird und daß das entsprechende Gradientenvektorbild in einem Gradientenspeicher abgespeichert wird, daß eine Richtungscodekorrektureinheit vorgesehen ist und daß der erzeugte Richtungscode in einen Richtungscodespeicher eingetragen wird und daß der Richtungscode einer Adressiereinheit zugeführt wird, daß ferner ein Merkerspeicher vorgesehen ist und der Gradientenspeicher, Richtungscodespeicher und Merkerspeicher mit Hilfe der Adressiereinheit angesprochen wird und die ausgelesenen Gradienten und Merkerwerte einer Gradienten- und Merkerauswerteeinheit zugeführt werden und außerdem eine Linienübergabeeinheit angeordnet ist, in die die von der Auswerteeinheit erkannten Linienpunkte übertragen werden und zusätzlich eine Steuereinheit vorgesehen ist, die Takt- und Steuersignale für die Adressiereinheit, Gradienten- und Merkerauswerteeinheit und Linienübergabeeinheit liefert und daß von der Linienübergabeeinheit die ermittelten Linienpunkte zur Weiterverarbeitung bereitgestellt werden.

Weitere Einzelheiten der Erfindung sind Gegenstand der Unteransprüche.

Wie bereits bekannt, sind technische Objekte in der Regel durch ihre Kanten und Texturen und die Kanten wiederum durch Merkmale wie Gerade, Kreise, Kreisbögen, Ecken beschreibbar. Diese Primitive stellen die Merkmale für die anschließende, durch gespeicherte Werkstückmodelle gesteuerte Szenenanalyse dar. Dabei wird mit Hilfe eines Suchbaumverfahrens versucht, aus dem im Bild vorhandenen Merkmalsvorrat ein dem Modell entsprechendes Muster zusammenzusetzen, dessen Lage und Orientierung dann als die Lage und Orientierung des gesuchten Werkstückes interpretiert wird. Eine in der Analyse mitlaufende Ähnlichkeitsbewertung der verwendeten Merkmale wird zu einer Aussage darüber, ob das Werkstück ausreichend sicher erkannt wird, verarbeitet.

Über die Formerkennung hinaus besteht die Möglichkeit, weitere Merkmale, wie zum Beispiel Grauwert bzw. Grau-

0162298

wertdifferenzen, oder Größen, die aus Grauwerten abgeleitet werden können (mittlerer Grauwert einer Fläche, Texturen, Farben) zur Erkennung einzusetzen.

Die durch die beschriebenen Anordnungen aus dem Gradientenbild einer Szene extrahierten Linien werden in einer nachgeschalteten Anordnung durch Segmentierung und Approximation in Primitive zerlegt.

Die Erfindung wird anhand der Figuren erläutert.

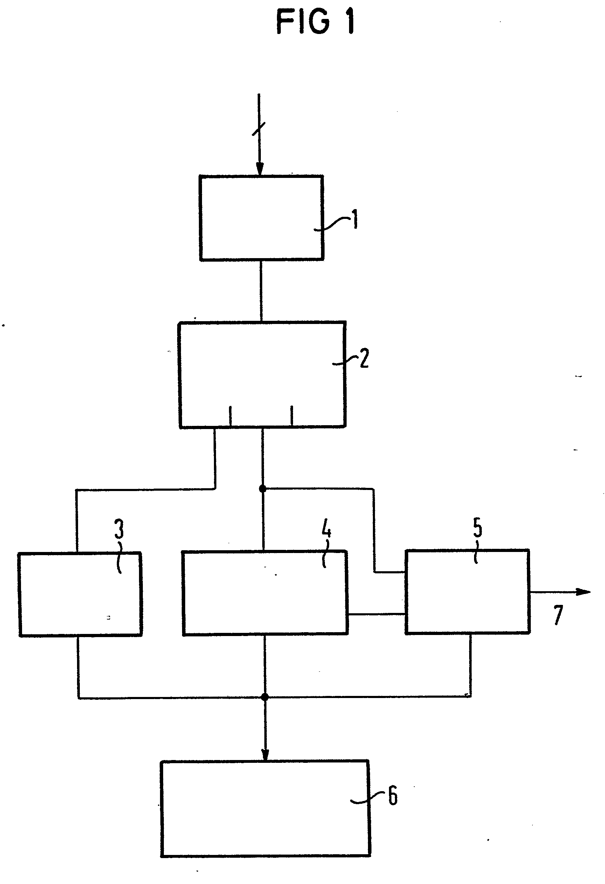

In der Figur 1 ist mit 1 ein lokaler Operator bezeichnet, an den sich ein Gradienten- und Merkerspeicher 2 (zum Beispiel RAM, 64 k x 20 bit, entspricht 256 x 256 Bildpunkten) anschließt. Darauf folgt eine Adressiereinheit 3 (zum Beispiel steuerbare Zähler, die mit PLA und PROM-Bausteinen realisiert sind) verbunden mit einer Gradienten- und Merkerauswerteeinheit 4 (zum Beispiel PLA, Flip-Flop, Vergleicher und Schwellenspeicher). Das Ergebnis aus der Adressiereinheit 3 und der Gradienten- und Merkerauswerteeinheit 4 wird einer Linienübergabeeinheit 5 (zum Beispiel Wechselpuffer oder FIFO-Speicher) zugeführt. Durch eine Steuerung 6 (zum Beispiel Mikroprozessor oder über Flip-Flop rückgekoppelte PROM) werden Takt- und Steuersignale auf die Adressiereinheit, die Gradienten- und Merkerauswerteeinheit und die Linienübergabeeinheit übertragen und deren Zusammenwirken koordiniert. Am Ausgang 7 der Linienübergabeeinheit können die ermittelten Linienpunkte ausgelesen werden.

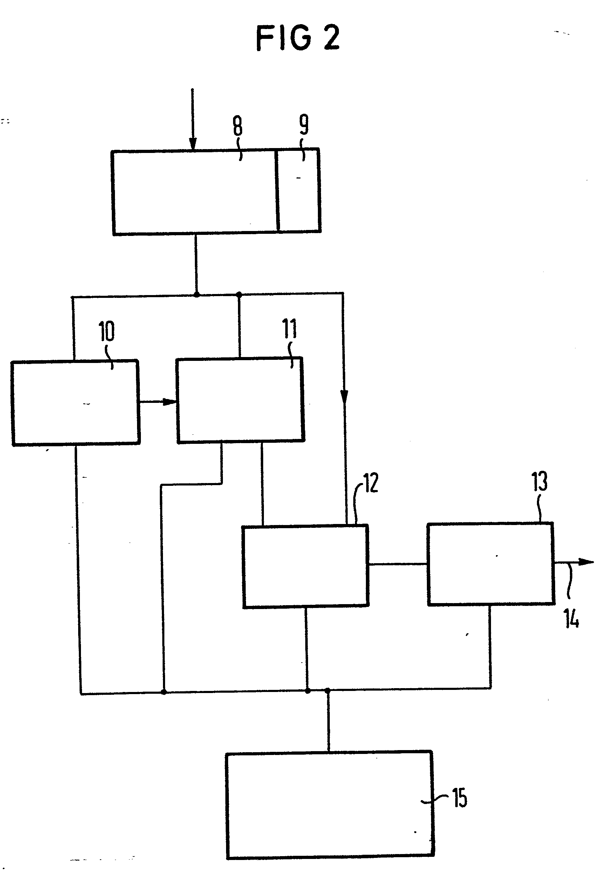

In der Figur 2 ist mit 8 ein Grauwert-Speicher (zum Beispiel herkömmlicher Bildspeicher 256 x 256 x 8 bit) und mit 9 ein Merkerspeicher (zum Beispiel Overlay-Ebene 256 x 256 x 1 bit) bezeichnet. 10 ist eine Adressiereinheit (zum Beispiel PLA, Flip-Flop, Vergleicher und Schwellenspeicher) und 11 ein lokaler Operator (zum Beispiel

**0162298**

3 x 3 Bildpunktmatrix mit Gewichtsfaktoren und Rechenwerk zur Gradientenberechnung). Mit diesem lokalen Gradientenoperator 11 hängt eine Gradienten- und Merkerauswerteeinheit 12 (zum Beispiel Wechselpuffer oder FIFO-Speicher) zusammen, die die ermittelten Linienpunkte über eine Linienübergabeeinheit 13 (zum Beispiel Mikroprozessor oder über Flip-Flop rückgekoppelte PROMs) zur weiteren Verarbeitung über den Ausgang 14 freigibt. Eine Steuerung 15 (zum Beispiel über Flip-Flop rückgekoppelte PROM) koordiniert den Ablauf der Adressiereinheit, des lokalen Operators, der Gradienten- und Merkerauswerteeinheit und der Linienübergabeeinheit.

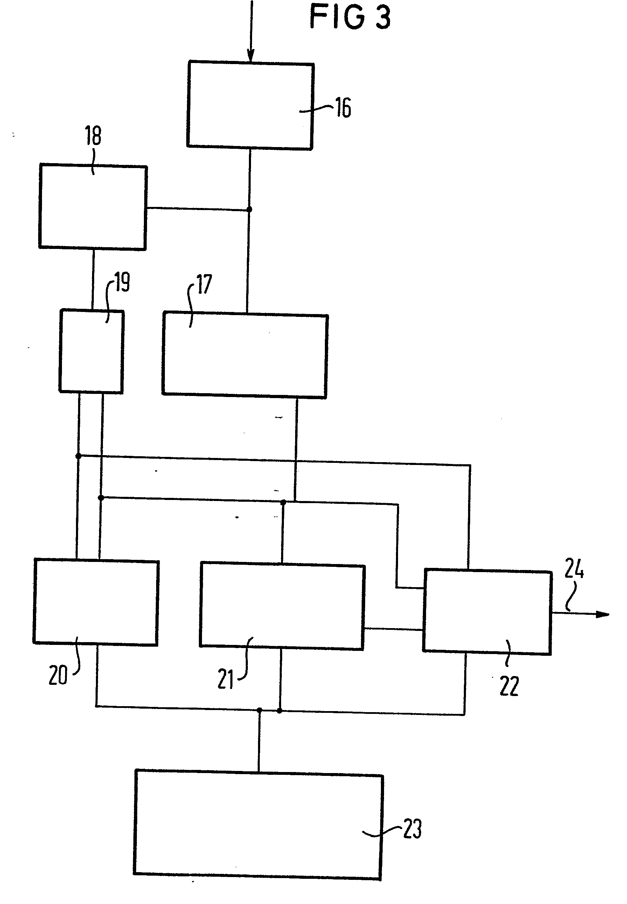

In der Figur 3 ist mit 16 ein lokaler Operator (zum Beispiel 3 x 3 Bildpunktmatrix mit Gewichtsfaktoren und Rechenwerk zur Gradientenberechnung) bezeichnet, an den sich ein Gradientenmerkerspeicher 17 (zum Beispiel mit 64K-RAM organisiert zu 64K x 17 Bit) anschließt. 18 ist eine Anordnung zur Extraktion eines Richtungscodes aus dem Gradientenwinkel mit Hilfe der Gradientenbeträge, zum Beispiel bestehend aus Verzögerungsleitungen, Betragsvergleicher und in PROMs abgespeicherten Korrekturtabellen. Daran schließt sich ein Richtungscodespeicher 19, der zum Beispiel 256 x 256 x 3 bit umfaßt. Parallel zu einer Adressiereinheit 20 (zum Beispiel steuerbare Zähler, die mit PLA und PROM-Bausteinen aufgebaut sind) ist ein Gradientenmerker und eine Richtungscodeauswerteeinheit 21 vorgesehen, zum Beispiel realisiert durch PLA, Flip-Flop, Vergleicher und Schwellenspeicher. Eine Linienübergabeeinheit ist mit 22 bezeichnet und besteht zum Beispiel aus einem Wechselpuffer oder FIFO-Speicher. Zusätzlich ist noch eine Steuerung 23 (zum Beispiel Mikroprozessor oder über Flip-Flop rückgekoppelte PROM) vorgesehen. Am Ausgang 24 der Linienübergabeeinheit können die ermittelten Linienpunkte ausgelesen werden.

Die Anordnung nach der Erfindung gemäß der Figur 1 arbeitet nach folgendem Verfahren:

Das von einem Bildwandler (zum Beispiel einer Halbleiterkamera) abgetastete, digitalisierte Grauwertbild wird mit Hilfe eines lokalen Operators 1 in eine Gradientenvektorsignalfolge (Gradientenvektorbild) umgewandelt. Die in den Operator mit Abtastfrequenz eingegebenen Signale werden, verzögert durch Verarbeitungsschritte, an den Gradientenspeicher 2 mit derselben Abtastfrequenz weitergegeben und abgespeichert. Der Gradientenspeicher kann in drei Teile aufgegliedert werden, und zwar in Speicher für die Gradientenbetragssignalfolge und Gradientenwinkelsignalfolge und einen Merkerspeicher. Der Merkerspeicher wird ebenfalls bei jeder neuen Bildaufnahme aufbereitet, so daß er für einen neuen Verfahrensablauf zur Verfügung steht und bitweise von der Gradientenauswerteeinheit neu beschrieben werden kann. Damit ist das Gradientenbild abgespeichert und zur Weiterverarbeitung bereit.

Mit Hilfe der Adressiereinheit 3 und der Gradienten/Merkerauswerteeinheit 4 wird nach einem Linienverlauf im Gradientenbild gesucht. Hierzu werden zeilenweise mittels der Adressiereinheit 3 die Gradientenbeträge und die entsprechenden Merkereintragungen ausgelesen. Jeder ausgelesene Gradientenbetrag wird mit einer vorgebbaren Betragsschwelle (Aufsetzschwelle) verglichen. Gleichzeitig wird im Merkerspeicher an der einem gelesenen Gradientenbetrag zugeordneten Speicherstelle überprüft, ob ein Merker (bereits erfolgte Eintragung) vorliegt. Liegt eine Merkereintragung vor, oder wird die Schwelle nicht überschritten, dann wird mit der Abtastung fortgefahren. Wenn die Schwelle überschritten wird und kein Merkereintrag vorliegt, wird die Adressiereinheit 3 und die Gradienten-Merkerauswerteeinheit 4 von Rastermode (zeilenweise Abtastung) auf Verfolgungsmode umgeschaltet.

Mit Hilfe des Verfolgungsmodes wird im Gegensatz zum Rastermode nicht mehr in einem vorgegebenen Raster abgetastet, sondern in Richtung einer aufgefundenen Linie. Weiterhin wird zu Beginn jedes Verfolgungsmodes auf eine ebenfalls in der Gradienten- und Merkerauswerteeinheit vorgegebene Verfolgungsschwelle umgeschaltet. Diese Verfolgungsschwelle ist dem Betrag nach kleiner als die ursprüngliche für die Rasterung maßgebende Aufsetzschwelle. Wenn diese Umschaltung erfolgt, ist ein Linienpunkt gefunden. Von diesem Linienaufsetzpunkt aus erfolgt die weitere Abtastung der Linie.

Die Linienverfolgung wird mit Hilfe von Gradientenbeträgen und der entsprechenden Gradientenwinkel durchgeführt.

Der Gradientenwinkel eines linienpunktbeschreibenden Gradientenvektors wird in einen Richtungscode umgewandelt, dessen Bereich die möglichen Verfolgungsrichtungen beschreibt.

Der Linienaufsetzpunkt entspricht dem ersten bestimmten Linienpunkt. Wurde dessen Richtungscode ermittelt, so wird der in dieser Richtung benachbart liegende Gradientenbetrag mit seinen links und rechts liegenden Nachbarbeträgen verglichen. Die Verfolgung erfolgt in Richtung des maximalen der drei verglichenen Gradientenbeträge, sofern eine maximal zugelassene Richtungsänderung der Verfolgung nicht überschritten wird. Trifft dies jedoch zu, so wird in Richtung des zweithöchsten Betrages verfolgt usw.

Ist die Richtung, in der weiterverfolgt werden soll, festgestellt worden, wird der Gradientenwinkel, der Richtungscode und die Lagekoordinaten des ausgewählten Nachbarpunktes (Gradientenvektors) an die Linienübergabeeinheit weitergegeben. Für diesen Punkt und die benachbarten Punkte werden im Merkerspeicher Markierungen eingetragen.

**0162298**

Die Markierungen werden vorgenommen, um bereits bearbeitete Punkte zu kennzeichnen und somit Mehrfachabtastungen zu vermeiden. Die Markierung der Nachbarpunkte wird durchgeführt, um zum Beispiel eine Extraktion von parallel angrenzenden Linien zu vermeiden.

Die Verfolgung wird in dieser Form fortgesetzt bis man entweder auf den Bildrand trifft oder die bereits erwähnte Verfolgungsschwelle nicht mehr erreicht wird. Stößt man bei der Verfolgung auf bereits markierte Bereiche, wird die Verfolgung nach einigen weiteren Verfolgungsschritten ebenfalls abgebrochen, weil man in diesem Fall auf bereits verfolgte Linien gestossen ist. Der Abbruch erfolgt nicht sofort, um die von zwei Linien gebildeten Ecken zu erfassen.

Zur Fortsetzung der Abtastung und zur Auffindung eines eventuellen weiteren Linienabschnitts wird die Verfolgung in umgekehrter Richtung vom Aufsetzpunkt aus aufgenommen. Die Richtungsumkehr erfolgt im wesentlichen durch Änderung des Richtungscodes um 180°. Wird nun bei einer Verfolgung in dieser Richtung das Linienende erreicht, wobei dieselben Kriterien, wie bereits beschrieben, gelten, wird die Adressiereinheit und die Gradienten-Merkerauswerteinheit von Verfolgungsmode auf Rastermode zurückgeschaltet. Anschließend wird geprüft, ob die gefundene Linie eine vorgeschriebene Länge überschreitet. Wenn das nicht der Fall ist, wird ein Signal der Linienübergabeeinheit zugeführt. Damit kann die gefundene und übergebene Linie als ungültig bezeichnet werden.

Dieser Vorgang läuft in der Regel bis der gesamte Gradienten- und Merkerspeicher und somit das ganze Bild abgearbeitet ist. Es besteht aber auch die Möglichkeit, nur Teilbereiche des Gradientenspeicherinhalts auf Linien zu untersuchen.

An den Ausgang 7 schließt sich eine Auswerteeinheit, zum Beispiel eine Liniensegmentierung, an. Wenn diese Auswerteeinheit für eine weitere Datenübergabe nicht bereit ist, so kann von ihr aus die Abtastung angehalten werden.

Die Koordinierung der einzelnen Verarbeitungseinheiten wird durch eine übergeordnete Steuerung vorgenommen. Außerdem ist eine Bus-Nahtstelle für ein Rechnersystem vorhanden, das übergeordnete Befehle, zum Beispiel Parameterversorgungen, Start/Stop, Zustandsworte an die Hardware ausgeben oder von dieser abfragen kann.

Die Anordnung nach der Erfindung gemäß der Figur 2 arbeitet nach folgendem Verfahren:

Das von einem Bildwandler abgetastete Grauwertbild wird digitalisiert und in einen Grauwertbildspeicher eingeschrieben. Dieser Grauwertbildspeicher 8 enthält eine zusätzliche Bitebene für Zusatzinformationen, die als Merkerspeicher 9 bezeichnet wird. Anschließend wird mit Hilfe der Adressiereinheit 10 das Flächenfilter mit Grauwerten aus dem Grauwertspeicher gefüllt und der erste Gradientenbetrag eines Bildpunktes berechnet. Dieser Gradientenbetrag wird mit einer vorgebbaren Aufsetzschwelle der Gradientenmerker-Auswerteeinheit 12 verglichen. Wird dieser Schwellbetrag vom gerechneten Gradienten nicht überschritten, so wird der Gradientenbetrag des nächsten Bildpunktes berechnet und so weiter. Wird die Aufsetzschwelle von gerechneten Gradienten eines Bildpunktes überschritten, so ist der erste Linienpunkt gefunden. Es wird vom bisherigen Rastermode auf einen Verfolgungsmode umgeschaltet. Nun wird von diesem Linienpunkt auch der Gradientenwinkel berechnet, im Merkerspeicher an der Stelle des in der Mitte des Flächenfilters liegenden Grauwertes ein Merker eingetragen und in Richtung des gerasterten Gradientenwinkels nach dem weiteren Linienverlauf gesucht.

Gleichzeitig wird von der Aufsetzschwelle auf eine ebenfalls vorgebbare Verfolgungsschwelle umgeschaltet. Diese Verfolgungsschwelle ist dem Betrag nach kleiner als die Aufsetzschwelle. Anschließend werden der in Richtung des Gradientenwinkels liegende benachbarte Gradientenvektor und seine zwei Nachbargradientenvektoren berechnet und im Merkerspeicher markiert. Die weitere Linienverfolgung erfolgt nun in Richtung des maximalen Gradienten, sofern eine maximal zugelassene Richtungsänderung der Verfolgung nicht überschritten wird. Trifft dies zu, so wird in Richtung des zweithöchsten Betrages verfolgt und so weiter. Gleichzeitig mit der Verfolgung wird ein Richtungscode erzeugt, der die verfolgte Richtung beschreibt.

Ist die Richtung, in der weiter verfolgt werden soll, festgestellt worden, wird der Gradientenwinkel, der Richtungscode und die Lagekoordinaten des ausgewählten Nachbarpunktes (Gradientenvektors) an die Linienübergabeeinheit weitergegeben. Der weitere Verlauf entspricht dem an dieser Stelle beschriebenen Ablauf nach Figur 1.

Die Anordnung nach der Erfindung gemäß der Figur 3 arbeitet nach folgendem Verfahren:

Das von einem Bildwandler abgetastete, digitalisierte Grauwertbild wird mit Hilfe eines lokalen Operators 16 in eine Gradientenvektorsignalfolge umgewandelt. Aus dem Gradientenwinkel eines jeden anfallenden Gradientenvektors wird in Echtzeit ein Richtungscode erzeugt, der zunächst dem gerasterten Winkel entspricht. Nun erfolgt eine Echtzeit-Richtungscodekorrektur im Baustein 18 derart, daß der Gradientenbetrag des nächsten in Richtungscoderichtung liegenden Gradientenvektors mit den Beträgen seiner zwei benachbarten (links und rechts) Gradientenvektoren verglichen und der größte Betrag festgestellt wird. Der Richtungscode des mittleren Gradientenvektors wird anschließend in Richtung des größten Betrages

**0162298**

korrigiert. Der Zugriff zu den Nachbarbeträgen wird mittels Verzögerungsleitungen realisiert. Die Gradientenvektoren werden entsprechend der Verarbeitungsverzögerung der korrigierten Richtungscode-Signalfolge verzögert und lagerichtig mit diesem in 17 bzw. 19 abgespeichert. Der Gradientenspeicher 17 kann in drei Teile aufgegliedert werden, und zwar in einen Speicher für die Gradientenbetragsignalfolge, Gradientenwinkelsignalfolge und einen Merkerspeicher. Der Merkerspeicher wird bei jeder neuen Bildaufnahme aufbereitet, so daß er für einen Verfahrensablauf zur Verfügung steht und bitweise von der Gradientenauswerteeinheit neu beschrieben werden kann. Damit ist das Gradientenbild und die Richtungscodesignalfolge abgespeichert und zur Weiterverarbeitung bereit.

Mit Hilfe der Adressiereinheit 20 und der Gradientenmerkerauswerteeinheit 21 wird nach einem Linienverlauf im Gradientenbild gesucht. Hierzu werden zeilenweise mittels der Adressiereinheit 20 die Gradientenbeträge und die entsprechenden Merkereintragungen ausgelesen. Jeder ausgelesene Gradientenbetrag wird mit einer vorgebbaren Betragsschwelle (Aufsetzschwelle) verglichen. Gleichzeitig wird im Merkerspeicher an der einem gelesenen Gradientenbetrag zugeordneten Speicherstelle überprüft, ob ein Merker (bereits erfolgte Eintragung) vorliegt. Liegt eine Merkereintragung vor, oder wird die Schwelle nicht überschritten, dann wird mit der Abtastung fortgefahren. Wenn die Schwelle überschritten wird und kein Merkereintrag vorliegt, wird die Adressiereinheit 20 und die Auswerteeinheit 21 von Rastermode (zeilenweises Abtasten) auf Verfolgungsmode umgeschaltet.

Mit Hilfe des Verfolgungsmodes wird im Gegensatz zum Rastermode nicht mehr in einem vorgegebenen Raster abgetastet, sondern in Richtung einer aufgefundenen Linie. Weiterhin wird zu Beginn jedes Verfolgungsmodes auf eine ebenfalls in der Gradienten- und Merkerauswerteeinheit

**0162298**

vorgegebene Verfolgungsschwelle umgeschaltet. Diese Verfolgungsschwelle ist dem Betrag nach kleiner als die ursprüngliche für die Rasterung maßgebende Aufsetzschwelle. Wenn diese Umschaltung erfolgt, ist ein Linienpunkt gefunden. Von diesem Linienaufsetzpunkt aus erfolgt die weitere Abtastung der Linie in Richtung des für jeden Gradientenvektor bereits gebildeten Richtungscode. Der Richtungscode und die Lagekoordinaten des bearbeiteten Linienpunktes (Gradientenvektor) sowie sein Gradientenwinkel werden an die Linienübergabeeinheit weitergegeben. Die weiteren Verfahrensschritte dieser Anordnung entsprechen denen der Anordnung 1.

15 Patentansprüche
3 Figuren

0162298

Patentansprüche

1. Anordnung zur Extraktion und Verdünnung von Linien aus dem Grauwertbild einer Szene, das von einem Bildwandler aufgenommen und in elektrische Signale umgesetzt wird, d a d u r c h  g e k e n n z e i c h n e t , daß Mittel (1) vorgesehen sind, in denen das Grauwertbild in ein Gradientenvektorbild in Echtzeit umgewandelt wird und daß das entsprechende Gradientenvektorbild in einem Gradientenspeicher (2) abgespeichert wird, daß ferner ein Merkerspeicher (2) vorgesehen ist und der Gradientenspeicher und der Merkerspeicher mit Hilfe einer Adressiereinheit (3) angesprochen und die ausgelesenen Werte einer Gradienten- und Merkerauswerteeinheit (4) zugeführt werden und außerdem eine Linienübergabeeinheit (5) angeordnet ist, in die die von der Auswerteeinheit erkannten Linienpunkte übertragen werden und zusätzlich eine Steuereinheit (6) vorgesehen ist, die Takt- und Steuersignale für die Adressiereinheit, Gradienten- und Merkerauswerteeinheit und Linienübergabeeinheit liefert und daß von der Linienübergabeeinheit die ermittelten Linienpunkte zur Weiterverarbeitung am Ausgang (7) bereitgestellt werden.

2. Anordnung zur Extraktion und Verdünnung von Linien aus dem Grauwertbild einer Szene, das von einem Bildwandler aufgenommen und in elektrische Signale umgesetzt wird, d a d u r c h  g e k e n n z e i c h n e t , daß das Grauwertbild in einen Grauwertbildspeicher (8) eingelesen wird, daß ferner ein Merkerspeicher (9) vorgesehen ist und der Grauwertbildspeicher und der Merkerspeicher mit Hilfe einer Adressiereinheit (10) angesprochen und aus den ausgelesenen Grauwerten mittels einer Grauwert-Gradientenumwandlungseinheit (11) ein Gradientenvektor erzeugt und einer Gradienten/Merkerauswerteeinheit (12) zugeführt wird und eine Linienübergabeeinheit (13) vorgesehen ist, in die die von der Auswerteeinheit erkannten Linienpunkte übertragen werden und zusätzlich eine

**0162298**

Steuereinheit (15) angeordnet ist, die Takt- und Steuersignale für die Adressiereinheit, Gradienten- und Merkerauswerteeinheit und Linienübergabeeinheit liefert und daß von der Linienübergabeeinheit die ermittelten Linienpunkte zur Weiterverarbeitung am Ausgang (14) bereitgestellt werden.

3. Anordnung zur Extraktion und Verdünnung von Linien aus dem Grauwertbild einer Szene, das von einem Bildwandler aufgenommen und in elektrische Signale umgesetzt wird, d a d u r c h   g e k e n n z e i c h n e t ,   daß Mittel (16) vorgesehen sind, in denen das Grauwertbild in ein Gradientenvektorbild in Echtzeit umgewandelt wird und daß das entsprechende Gradientenvektorbild in einen Gradientenspeicher (17) abgespeichert wird, daß eine Richtungscodekorrektureinheit (18) vorgesehen ist und daß der erzeugte Richtungscode in einen Richtungscodespeicher (19) eingetragen und dieser einer Adressiereinheit (20) zugeführt wird, daß ferner ein Merkerspeicher (17) vorgesehen ist und der Gradientenspeicher, Richtungscodespeicher und Merkerspeicher mit Hilfe der Adressiereinheit angesprochen wird und die ausgelesenen Gradienten- und Merkerwerte einer Gradienten- und Merkerauswerteeinheit (21) zugeführt werden und außerdem eine Linienübergabeeinheit (22) angeordnet ist, in die die von der Auswerteeinheit erkannten Linienpunkte übertragen werden und zusätzlich eine Steuereinheit (23) vorgesehen ist, die Takt- und Steuersignale für die Adressiereinheit, Gradienten- und Merkerauswerteeinheit und Linienübergabeeinheit liefert und daß von der Linienübergabeeinheit die ermittelten Linienpunkte zur Weiterverarbeitung am Ausgang (24) bereitgestellt werden.

4. Anordnung nach Anspruch 1, 2 oder 3,   d a d u r c h   g e k e n n z e i c h n e t ,   daß als Mittel zur Umwandlung des Grauwertbildes in ein Gradientenvektorbild ein Flächenfilter (lokaler Operator) vorgesehen ist.

5. Anordnung nach Anspruch 1, 2 oder 3, d a d u r c h
g e k e n n z e i c h n e t , daß in der Adressiereinheit (3, 10 oder 20) ein Rastermode und ein Verfolgungsmode festgelegt sind und die Gradienten- und Merkerauswerteeinheit (4, 12 oder 21) die adressierten Gradientenbeträge auswertet und beim Überschreiten eines vorgeschriebenen minimalen Gradientenbetrages (Aufsetzschwelle)
auf Verfolgungsmode umschaltet.

6. Anordnung nach einem der Ansprüche 1 bis 3 und 5,
d a d u r c h   g e k e n n z e i c h n e t , daß zwei
unabhängige Speicher mit Vergleicher vorgesehen sind,
durch deren Inhalt die Aufsetz- und Verfolgungsschwelle
festgelegt werden.

7. Anordnung nach einem der Ansprüche 1 bis 3 und 5,
d a d u r c h   g e k e n n z e i c h n e t , daß ein
zusätzlicher Speicher für die maximal zulässige Richtungscodeänderung der Verfolgung und eine Vergleichsanordnung
zum Vergleich der maximal zulässigen Richtungscodeänderung
mit der aktuellen Richtungscodeänderung vorgesehen ist,
die beim Überschreiten der maximal zulässigen Richtungscodeänderung die Verfolgung abbricht.

8. Anordnung nach einem der Ansprüche 1 bis 3, d a -
d u r c h   g e k e n n z e i c h n e t , daß die
Adressiereinheit mit drei Zählern ausgestattet ist, wobei mit Hilfe des ersten Zählers das Bild nach Linien abgesucht wird, mit Hilfe des zweiten Zählers die Linien
vom Aufsetzpunkt in Richtungscoderichtung bis zu einem
ersten Endpunkt abgearbeitet wird und mit Hilfe des dritten Zählers die Linie vom Aufsetzpunkt entgegen der Coderichtung bis zu einem zweiten Endpunkt abgearbeitet wird
und zwei Linienteilstücke in einer Linienübergabeeinheit
eingeschrieben werden, so daß die Linie in einem Stück
mit Hilfe von Vor-/Rückwärtszählung auslesbar ist.

9. Anordnung nach einem der Ansprüche 1 bis 3, d a - d u r c h g e k e n n z e i c h n e t , daß die Adressiereinheit mit zwei Adressenzählern ausgestattet ist, wobei mit Hilfe des ersten Zählers das Bild nach Linien abgesucht wird, mit Hilfe des zweiten Zählers die gefundene Linie bis zu ihrem ersten Ende verfolgt und von diesem Ende aus in entgegengesetzter Richtung bis zu ihrem zweiten Ende abgearbeitet wird und in eine Linienübergabeeinheit als eine Linie eingeschrieben wird, daß die Linie in einem Stück auslesbar ist.

10. Anordnung nach einem der Ansprüche 1 bis 3, d a - d u r c h g e k e n n z e i c h n e t , daß ein Linienlängenspeicher und eine Vergleichseinheit in der Gradienten- und Merkerauswerteeinheit vorgesehen sind, mit deren Hilfe eine minimale Linienlänge vorgeschrieben wird.

11. Anordnung nach einem der Ansprüche 1 bis 3, d a - d u r c h g e k e n n z e i c h n e t , daß die Gradienten- und Merkerauswerteeinheit eine Merkerlängeneinheit enthält, die es gestattet, die Linienverfolgung nach Auftreffen auf eine bereits abgearbeitete Gradientenvektorfolge um eine vorwählbare Anzahl von Linienpunkten weiter durchzuführen.

12. Anordnung nach einem der Ansprüche 1 bis 3, d a - d u r c h g e k e n n z e i c h n e t , daß zusätzlich ein Topographiespeicher vorhanden ist, in den an allen Linienauftreffpunkten die Liniennummern der beteiligten Linien und die Koordinaten der Auftreffpunkte eingetragen werden.

13. Anordnung nach einem der Ansprüche 1 bis 3 und 12, d a d u r c h g e k e n n z e i c h n e t , daß der Gradientenmerkerspeicher bzw. der Graubildspeicher einen zusätzlichen Eingang und Ausgang aufweist, so daß er die

0162298

Funktion des Topographiespeichers vom Gradienten-Merkerspeicher bzw. vom Graubildspeicher übernehmen kann.

14. Anordnung nach einem der Ansprüche 1, 3 und 13, d a d u r c h   g e k e n n z e i c h n e t , daß ein Schalter vorgesehen ist, mit dessen Hilfe der Gradientenmerkerspeicher mit Grauwerten (Bildpunkten) zu beschreiben ist.

15. Anordnung nach einem der Ansprüche 1 bis 3, d a - d u r c h   g e k e n n z e i c h n e t , daß der Gradientenmerkerspeicher bzw. der Grauwertbildspeicher und die Adressiereinheit mit der Gradientenmerkerauswerteeinheit zusätzlich Adressierdecoder und Datenschnittstellen enthält, um den Zugriff zu Daten in der Anordnung zu ermöglichen.

FIG 1

# FIG 2

# FIG 3

Europäisches
Patentamt

**EUROPÄISCHER RECHERCHENBERICHT**

**0162298**

Nummer der Anmeldung

EP 85 10 4778

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PROCEEDINGS OF THE IEEE COMPUTER SOCIETY CONFERENCE ON PATTERN RECOGNITION & IMAGE PROCESSING, 14-17 Juni 1982, Seiten 358-361, IEEE, Las Vegas, Nevada, US; D. JUVIN et al.: "Anima (Analyses of Images) a quasi real time system" * Abschnitte 2.1,2.2 * | 1-5,7, 10,14, 15 | G 06 K   9/48 |
| Y | SYSTEMS COMPUTERS CONTROLS, Band 6, Nr. 2, 1975, Seiten 88-96, Washington, US; M. YACHIDA et al.: "A high-speed pattern processor for scene analysis" * Abschnitte 2,3 * | 1-5,7, 10,14, 15 | |
| A | IEEE COMPUTER SOCIETY CONFERENCE ON COMPUTER VISION AND PATTERN RECOGNITION, 19-23 Juni 1983, Seiten 546-549, IEEE, Washington D.C., US; T. MARUYAMA et al.: "Real-time image processor with two convolution filter modules and a peak extraction module" * Abschnitte 2-4 * | 1-4 | RECHERCHIERTE SACHGEBIETE (Int. Cl.4) <br><br> G 06 K   9/00 |

--- -/-

Der vorliegende Recherchenbericht wurde für alle Patentansprüche erstellt.

| Recherchenort DEN HAAG | Abschlußdatum der Recherche 30-07-1985 | Prüfer SONIUS M.E. |
|---|---|---|

Europäisches
Patentamt

EUROPÄISCHER RECHERCHENBERICHT

0162298
Nummer der Anmeldung

EP 85 10 4778

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATTERN RECOGNITION, Band 13, Nr. 4, 1981, Seiten 285-291, Oxford, GB; A.B. SHERMAN et al.: "A method of boundary determination in digital images of urothelial cells" * Seite 286, rechte Spalte, Zeilen 3-43 * | 1-4 | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 30-07-1985 | Prüfer SONIUS M.E. |
|---|---|---|